# EUROPÄISCHE PATENTSCHRIFT

(11) **EP 0 626 900 B1**
(45) Veröffentlichungstag und Bekanntmachung des Hinweises auf die Patenterteilung: **08.10.1997**
(21) Anmeldenummer: 94900822.1
(22) Anmeldetag: 19.11.1993
(51) Int. Cl.: B29B 17/00, B29B 13/02, B29B 13/10, B29K 23/00, B29K 25/00, B29K 67/00

(54) **VERFAHREN ZUM AUFBEREITEN VON GEFORMTEN HOHLKÖRPERN AUS KUNSTSTOFFMATERIAL**
PROCESS FOR RECYCLING MOULDED HOLLOW BODIES FROM PLASTIC MATERIAL
PROCEDE POUR LE RECYCLAGE DE CORPS CREUX MOULES EN MATIERE PLASTIQUE

(30) Priorität: 24.11.1992 DE 4239450
(43) Veröffentlichungstag der Anmeldung: 07.12.1994
(73) Patentinhaber: BREVETEAM AG, CH-6300 Zug (CH)
(72) Erfinder: TESCH, Wolfgang, CH-3185 Schmitten (CH)
(74) Vertreter: Lesser, Karl-Bolko, Dipl.-Ing.
(86) Internationale Anmeldenummer: EP9303241
(87) Internationale Veröffentlichungsnummer: WO9412329

(56) Entgegenhaltungen:
- EP-A- 0 054 388
- DE-A- 4 016 410
- DE-A- 4 203 302
- FR-A- 2 599 665
- GB-A- 1 087 041
- US-A- 4 402 123
- US-A- 5 129 588
- US-T- 941 016

## Beschreibung

Die Erfindung betrifft ein Verfahren zum Aufbereiten von geformten Hohlkörpern aus Kunststoffmaterial, insbesondere von Kunststofflaschen.

Die heute bekannten Prozesse für die Wiederverwertung gebrauchter thermoplastischer Kunststoffe beruhen alle auf einer vollständigen Wiedereinschmelzung, meist unter der Herstellung eines Regranulates, welches dann unter Hitzeeinwirkung zu Gebrauchsprodukten verformt wird ("R.J. Ehrig, Plastics Recycling 1992, Mauser"). Diese Art der Wiederaufarbeitung ist energie- und arbeitsaufwendig und die daraus entstehenden Recyclingprodukte sind von minderer Qualität.

Ein Verfahren zur Wiederaufbereitung von Polyethylenterephthalat (PET) ist aus "Reutilization of Reclaimed PET-Resin, Yukio Okawa, Recycling International 1984" bekannt. In dem beschriebenen Verfahren werden aus PET Abfall spiralisierte Fasern hergestellt. Dazu werden zuerst aus dem Abfallmaterial Granulate hergestellt, diese geschmolzen und aus der Schmelze durch Spinnen Fasern hergestellt, welche anschließend einem weiteren Verarbeitungsprozeß unterzogen werden, bei dem sie verstreckt und dann gekräuselt werden. Die einzelnen gekräuselten Fasern können anschließend zu einem großflächigeren Produkt verklebt werden. Bei diesem Prozeß der Aufbereitung des geformten Kunststoffes wird das Material thermisch verarbeitet, d.h. seine Struktur wird zunächst durch Schmelzen "zerstört" und anschließend wiederhergestellt. Bei Materialien wie Polyethylenterephthalat tritt durch mehrmaliges Aufschmelzen und Extrudieren eine zunehmende Verschlechterung der Materialeigenschaften auf; insbesondere lösen Verunreinigungen, u.a. Waschmittel (Detergentien) und Schmelzkleber einen autokatalytischen Prozess aus und führen zur fortwährenden Kettenverkürzung und der Akkumulation von Acetaldehyd. Außerdem führen die Schmelzkleberreste von Etiketten zu einer unerwünschten Braunfärbung des Produkts. Eine Verminderung der Qualität durch mehrmaliges Einschmelzen ist auch für andere Thermoplaste, z.B. Posypropylen, bekannt.

Aufgabe der vorliegenden Erfindung ist es, ein Verfahren zum Aufbereiten von geformten Hohlkörpern aus Kunststoffmaterial anzugeben, bei dem mit einem möglichst geringen Energieaufwand das Kunststoffmaterial zu einem neu einsetzbaren Produkt verarbeitet wird.

Diese Aufgabe ist durch das in den Ansprüchen 1 und 11 angegebene Verfahren gelöst. Ein dabei entstehendes Produkt ist in den Ansprüchen 13 und 14 angegeben. Unteransprüche stellen vorteilhafte Weiterbildungen dar.

Nach dem erfindungsgemäßen Verfahren wird der geformte Hohlkörper aus Kunststoffmaterial in Streifen geschnitten oder gehobelt, die Streifen wirr zueinander angeordnet und einer Temperaturbehandlung ausgesetzt, wobei die Temperatur im Bereich des Glaspunktes liegt, für PET also weit unterhalb der Schmelztemperatur. Unter Temperatureinfluß verformen sich die einzelnen Streifen räumlich und verhaken sich miteinander. Das Verfahren ist preiswert und energiesparend durchführbar. Es ist z.B. im Fall von PET keine Trocknung, wie beim Granulieren, erforderlich. Die aus dem geformten Hohlkörper geschnittenen Streifen brauchen nur auf eine Temperatur erwärmt werden, bei der sie ihre räumliche Form verändern. Die verformten Kunststoffhohlkörper, wie z.B. Kunststofflaschen, werden meistens im Streckblasverfahren oder im Blasformverfahren bzw. im Tiefziehverfahren hergestellt. Beim Streckblasen werden die Hohlkörper biaxial verstreckt, wobei die durch Spritz- oder Extrusionsblasen hergestellten Vorformlinge zunächst mechanisch über einen Dorn gereckt und anschließend durch Blasen verstreckt werden; beim Blasformen wird der Vorformling unter Gasdruck umgeformt. Bei diesen Formverfahren kühlen sich die Außen- und Innenschichten der Hohlkörper nach der thermischen Formung unterschiedlich schnell ab, wodurch ein Kristallinitätsgradient über den Wandungsquerschnitt entsteht. Die aus dem geformten Material in Längsrichtung des Hohlkörpers hergestellten Streifen verformen sich bei gleicher Temperatur stärker als Streifen, die in Querrichtung des Hohlkörpers guer geschnitten wurden. Die durch das Zerschneiden des Kunststoffhohlkörpers in seine Längsrichtung hergestellten Streifen kräuseln sich bei Temperatureinwirkung teilweise so stark, daß sie bei ihrer Anordnung übereinander während des Erwärmungsprozesses sich sogar miteinander verhaken. Dieses Verhaken ist meistens so stark, daß ein zusammenhängendes Gebilde entsteht, welches z.B. die Form eines Knäuels aufweist. Die in Querrichtung des Kunststoffhohlgegenstandes geschnittenen Streifen verformen sich bei erhöhter Temperatur weniger stark. Die Verformung ist mehr einem "Biegen" ähnlich. Werden diese Streifen übereinander angeordnet und einer erhöhten Temperatur ausgesetzt, so bilden sie ein sehr locker zusammenhängendes Gebilde, bei dem die einzelnen Streifen locker miteinander verhakt sind.

Die Kunsttoffstreifen können entweder durch Schneiden des Kunststoffhohlkörpers in Längs- oder Querrichtung oder durch Auftrennen des Hohlkörpers in zwei oder mehrere Teile und das Abhobeln von einzelnen Streifen hergestellt werden.Beim Hobeln ist eine geringere Dicke der Streifen erreichbar als beim Schneiden. Die durch Zerschneiden des Kunststoffhohlkörpers hergestellten Streifen weisen vorzugsweise eine Länge von etwa 5 bis 10cm und eine Breite von etwa 0,5 bis 2,5 mm auf. Sie können auch einen quadratischen Querschnitt aufweisen. Die durch Hobeln hergestellten Streifen weisen vorzugsweise eine Länge von etwa 5 cm auf und eine Dicke von etwa 0,1 mm.

Die große Anzahl von Kunststoffhohlkörpern ist aus Polyethylenterephthalat hergestellt. Die in Längsrichtung der PET-Kunststofflaschen geschnittenen Streifen "kräuseln" sich bei Termperaturen von ca. 120°C innerhalb kürzester Zeit. Jedoch bereits bei 80°C tritt ein "Kräuseleffekt" auf, wobei jedoch die Kräuselung nicht so stark ist.

Die durch Hobeln hergestellten Streifen weisen bereits bei Temperaturen, die weit unterhalb des Schmelzpunktes des Kunststoffmaterials liegen, einen "Kräuseleffekt" auf.

Die gehobelten Streifen kräuseln sich bereits nach Abschluß dieses mechanischen Bearbeitungs-/ Trennvorganges, unabhängig davon, ob sie in Längsrichtung oder in Querrichtung des Hohlkörpers verlaufen. Ist eine starke Kräuselung und Herstellung von zusammenhängenden "Knäuelgebilden " nicht notwendig oder nicht erwünscht, so können "nur" gehobelte Streifen (ohne Temperaturbehandlung) für verschiedene Einsatzgebiete verwendet werden.

Die nach dem erfindungsgemäßen Verfahren hergestellten Gebilde oder Streifen sind anhand der nachfolgenden Zeichnungen näher erläutert.

Es zeigen:
- Fig. 1:: Ein Knäuelgebilde aus durch Zerschneiden einer PET-Kunststofflasche in ihre Längsrichtung hergestellten Streifen, welche wirr aufeinander angeordnet und einer Temperaturbehandlung ausgesetzt wurden.
- Fig. 2:: Ein locker gebundenes Gebilde aus durch Zerschneiden einer PET-Flasche in Querrichtung hergestellten Streifen.
- Fig. 3:: Anordnung von längs oder quer zur Verformungsrichtung einer Kunststofflasche verlaufenden, durch Hobeln hergestellten Streifen.

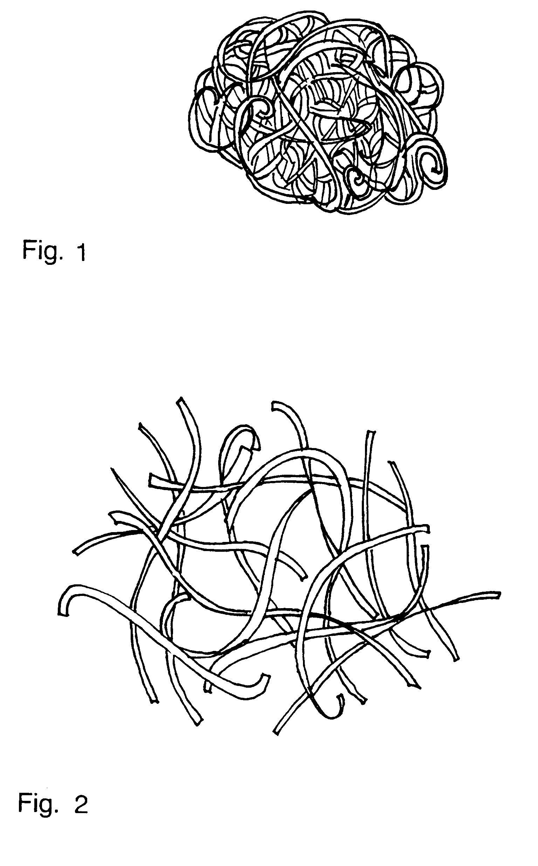

Für das in Fig. 1 dargestellte Gebilde wurden zunächst Streifen 1 der Breite von etwa 0,8mm in Längsrichtung einer PET-Kunststofflasche geschnitten. Die Streifen 1 wurden anschließend wirr aufeinander angeordnet und einer Temperaturbehandlung von etwa 120°C ausgesetzt. Nach einer Dauer von einigen Sekunden ist das dargestellte Gebilde 2 entstanden, wobei die einzelnen Streifen 1 sich derart stark kräuselten, daß sie sich miteinander verhakten und den dargestellten Knäuel 2 bildeten. Die Verhakung der einzelnen Streifen 1 miteinander ist beständig, so daß der Knäuel 2 ein derart fest zusammenhängendes Gebilde 2 darstellt, daß es sich als Füllmaterial für Polstermöbel oder Verpackungsbehälter eignet. Er kann auch als Füllkörper für chemische oder biologische Reaktionen eingesetzt werden.

In Fig. 2 ist ein lockeres Gebilde dargestellt, welches aus Streifen 3 entstanden ist, die in Querrichtung einer PET-Flasche geschnitten, anschließend wirr aufeinander angeordnet und einer Temperaturbehandlung von etwa 120°C ausgesetzt worden sind. Die Kräuselung dieser Streifen 3 ist nicht so stark wie die der in Fig. 1 dargestellten Streifen 1. Die Streifen 3 bilden ein locker miteinander zusammenhängendes Gebilde. Solche Gebilde, welche auch einfach in einzelne Streifen 3 getrennt werden können, eignen sich besonders zur Herstellung von z.B. Fußmatten oder anderem Füllmaterial für verschiedene Verpackungs- oder Polsterzwecke.

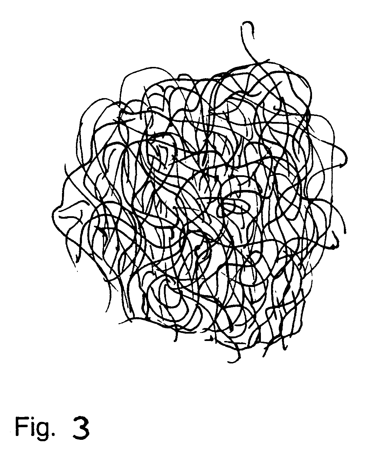

In Fig. 3 sind aus einer Kunststofflasche in Quer- und/oder Längsrichtung abgehobelte Streifen 4 dargestellt. Die Streifen sind faserartig ausgebildet und weisen bereits nach dem mechanischen Hobelvorgang eine Kräuselung auf. Diese Streifen 4 eignen sich besonders als lockeres Schüttmaterial für verschiedene Füllzwecke.

## Patentansprüche

1. Verfahren zum Aufbereiten von geformten, insbesondere geblasenen oder tiefgezogenen Hohlkörpern aus Kunststoffmaterial, bei dem aus den geformten Kunststoffhohlkörpern Streifen (1,3,4) geschnitten oder gehobelt werden, die Streifen (1,3,4) wirr zueinander angeordnet und in dieser Anordnung einer Temperatur unterhalb der Schmelztemperatur des Kunststoffmaterials ausgesetzt werden, bei der sich die einzelnen Streifen (1,3,4) räumlich verformen und miteinander verhaken.

2. Verfahren nach Anspruch 1, **dadurch gekennzeichnet**, daß die Streifen (1) in Längsrichtung des Kunststoffhohlkörpers geschnitten werden.

3. Verfahren nach Anspruch 1 oder 2, **dadurch gekennzeichnet**, daß die Streifen (3) in Querrichtung des Kunststoffhohlkörpers geschnitten werden.

4. Verfahren nach einem oder mehreren der vorangegangenen Ansprüche, dadurch gekennzeichnet, daß das Kunststoffmaterial Polyethylenterephtalat ist.

5. Verfahren nach Anspruch 4, dadurch gekennzeichnet, daß die Streifen (1, 3) einer Temperatur zwischen 80 °C und 120 °C, insbesondere einer Temperatur von 120 °C ausgesetzt werden.

6. Verfahren nach einem der vorangegehenden Ansprüche, dadurch gekennzeichnet, daß die Streifen eine Breite von etwa 0,5 bis 2,5 mm und eine Länge des geschnittenen Hohlkörpers aufweisen.

7. Verfahren nach einem der Ansprüche 1 bis 3 und 6, dadurch gekennzeichnet, daß das Kunststoffmaterial Polypropylen ist.

8. Verfahren nach Anspruch 7, dadurch gekennzeichnet, daß die Streifen einer Temperatur von etwa 120 °C bis 170 °C ausgesetzt werden.

9. Verfahren nach Anspruch 1 bis 3 und 6, dadurch gekennzeichnet, daß das Kunststoffmaterial Polystyrol ist.

10. Verfahren nach Anpruch 9, dadurch gekennzeichnet, daß die Streifen einer Temperatur von etwa 110 °C bis 170 °C ausgesetzt werden.

11. Verfahren zum Aufbereiten von geformten Hohlkörpern aus Kunststoffmaterial, bei dem die Kunststoffhohlkörper aufgeschnitten werden und von dem aufgeschnittenen Material faserartige Streifen abgehobelt werden, wobei sich die einzelnen Streifen kräuseln.

12. Verfahren nach Anspruch 11, dadurch gekennzeichnet, daß die Streifen eine Länge von ca. 5 cm und eine Breite von ca. 0,1 mm aufweisen.

13. Räumliches Kunststoffgebilde, hergestellt im Verfahren nach einem der Anprüche 1 oder 2 und 4 bis 10, bei dem aus einem geformten Kunststoffhohlkörper in seiner Längsrichtung geschnittene oder gehobelte Streifen (1,4) zu einem "Knäuel" (2) miteinander verhakt vorliegen.

14. Räumliches Kunststoffgebilde, hergestellt im Verfahren nach einem der Ansprüche 1 und 3 bis 10, bei dem aus einem geformten Kunststoffhohlkörper in seiner Querrichtung geschnittene oder gehobelte Streifen (3,4) locker miteinander verhakt vorliegen.

15. Verwendung des im Verfahren nach einem der Ansprüche 1-12 hergestellten Gebildes als Füllkörper für Wäscher, Bioreaktoren, Polstermöbel oder Verpackungsbehälter.

16. Verwendung des räumlichen Kunststoffgebildes nach Anspruch 13 oder 14 zur Herstellung eines Gebildes mit großflächiger Ausdehnung durch Verbinden der einzelnen Gebilde miteinander.

## Claims

1. Method of treating shaped, in particular blown or deep-drawn, hollow bodies of plastics material in which strips (1, 3, 4) are cut or shaved from the shaped hollow plastics bodies, the strips (1,3,4) are arranged in a tangled or chaotic relationship to one another and in this arrangement they are subjected to a temperature below the melting temperature of the plastics material, at which the individual strips, (1, 3, 4), are spatially deformed and hooked together.

2. Method according to claim 1, **characterised in that,** the strips (1) are cut in the direction of the length of the hollow plastics body.

3. Method according to claim 1 or 2, **characterised in that,** the strips (3) are cut in a transverse direction in relation to the hollow plastics body.

4. Method according to one or more of the foregoing claims, characterised in that, the plastics material is polyethylene terephthalate.

5. Method according to claim 4, characterised in that the strips (1, 3) are exposed to a temperature between 80°C and 120°C, in particular a temperature of 120°C.

6. Method according to one of the foregoing claims, characterised in that the strips have a width of about 0.5 to 2.5 mm and the length of the cut hollow body.

7. Method according to one of claims 1 to 3 and 6, characterised in that the plastics material is polypropylene.

8. Method according to claim 7, characterised in that the strips are exposed to a temperature of about 120°C to 170°C.

9. Method according to claim 1 to 3 and 6, characterised in that the plastics material is polystyrene.

10. Method according to claim 9, characterised in that the strips are exposed to a temperature of about 110°C to 170°C .

11. Method of treating shaped hollow bodies of plastics material in which the hollow plastics body is cut up and fibre-like strips are shaved from the cut-up material, whereby the individual strips curl up.

12. Method according to claim 11, characterised in that the strips have a length of about 5 cm and a width of 0.1 mm.

13. Three-dimensional plastics body manufactured by the method according to one of claims 1 or 2 and 4 to 10, in which strips (1, 4) cut or shaved from a shaped hollow plastics body in the direction of its length are present hooked together to form a "tangled ball" (2).

14. Three-dimensional plastics body manufactured by the method according to one of claims 1 and 3 to 10 in which strips (3, 4) cut or shaved from a shaped hollow plastics body in a transverse direction are present loosely hooked together.

15. The use of the body produced by the method according to one of claims 1 - 12 as a filler for washers, bio-reactors, upholstered furniture or packaging containers.

16. The use of the three-dimensional plastics body according to claim 13 or 14 for producing a body having large-area extent by bonding together the individual bodies.

## Revendications

1. Procédé pour le recyclage de corps creux moulés en matière plastique, en particulier soufflés ou emboutis, dans lequel les corps creux moulés en matière plastique sont découpés ou rabotés en bandes (1,3,4), les bandes (1,3,4) sont disposées en pêle-mêle entre elles et soumises, dans cette disposition, à une température au-dessous de la température de fusion de la matière plastique à laquelle les différentes bandes (1,3,4) se déforment spatialement et s'accrochent l'une dans l'autre.

2. Procédé suivant la revendication 1, caractérisé par le fait que les bandes (1) sont découpées dans le sens longitudinal du corps creux en matière plastique.

3. Procédé suivant la revendication 1 ou 2, caractérisé par le fait que les bandes (3) sont découpées dans le sens transversal du corps creux en matière plastique.

4. Procédé suivant l'une ou plusieurs des revendications précédentes, caractérisé par le fait que la matière plastique est du téréphtalate de polyéthylène.

5. Procédé suivant la revendication 4, caractérisé par le fait que les bandes (1,3) sont soumises à une température comprise entre 80°C et 120°C, en particulier à une température de 120°C.

6. Procédé suivant l'une ou plusieurs des revendications précédentes, caractérisé par le fait que les bandes présentent une largeur d'environ 0,5 à 2,5 mm et une longueur du corps creux découpé.

7. Procédé suivant l'une des revendications 1 à 3 et 6, caractérisé par le fait que la matière plastique est du polypropylène.

8. Procédé suivant la revendication 7, caractérisé par le fait que les bandes sont soumises à une température d'environ 120°C à 170°C.

9. Procédé suivant l'une des revendications 1 à 3 et 6, caractérisé par le fait que la matière plastique est du polystyrène.

10. Procédé suivant la revendication 9, caractérisé par le fait que les bandes sont soumises à une température d'environ 110°C à 170°C.

11. Procédé pour le recyclage de corps creux moulés en matière plastique, dans lequel les corps creux en matière plastique sont découpés et le matériau découpé est raboté en bandes en forme de fibres, les différentes bandes se frisant.

12. Procédé suivant la revendication 11, caractérisé par le fait que les bandes présentent une longueur d'environ 5 cm et une largeur d'environ 0,1 mm.

13. Structure spatiale en matière plastique, réalisée par le procédé suivant l'une des revendications 1 ou 2 et 4 à 10, dans lequel des bandes (1,4) découpées ou rabotées d'un corps creux moulé en matière plastique, dans le sens longitudinal de celui-ci, se présentent accrochées l'une dans l'autre, pour former une "pelote" (2).

14. Structure spatiale en matière plastique, réalisée par le procédé suivant l'une des revendications 1 et 3 à 10, dans lequel des bandes (3,4) découpées ou rabotées d'un corps creux moulé en matière plastique, dans le sens transversal de celui-ci, se présentent accrochées, de manière peu serrée, l'une dans l'autre.

15. Utilisation de la structure réalisée par le procédé suivant l'une des revendications 1 à 12 comme élément de remplissage pour machines à laver, bioréacteurs, meubles rembourrés ou conteneurs d'emballage.

16. Utilisation de la structure spatiale en matière plastique suivant la revendication 13 ou 14 pour la réalisation d'une structure à grande extension de surface par assemblage des différentes structures l'une à l'autre.
